(19) Europäisches Patentamt
European Patent Office
Office européen des brevets

(11) **EP 2 718 630 B1**

(12) # EUROPÄISCHE PATENTSCHRIFT

(45) Veröffentlichungstag und Bekanntmachung des Hinweises auf die Patenterteilung:
**06.07.2022 Patentblatt 2022/27**

(21) Anmeldenummer: **12726592.4**

(22) Anmeldetag: **04.05.2012**

(51) Internationale Patentklassifikation (IPC):
**G02B 5/22** *(2006.01)*        **F24C 7/08** *(2006.01)*
**B25H 3/00** *(2006.01)*        **C03C 17/00** *(2006.01)*
**G02B 5/02** *(2006.01)*

(52) Gemeinsame Patentklassifikation (CPC):
**B25H 3/003; C03C 17/002; F24C 7/083;**
**G02B 5/02; G02B 5/223; G02B 5/226;**
C03C 2217/72; F24C 15/102

(86) Internationale Anmeldenummer:
**PCT/EP2012/058200**

(87) Internationale Veröffentlichungsnummer:
**WO 2012/168012 (13.12.2012 Gazette 2012/50)**

(54) **ANZEIGEVORRICHTUNG**

INDICATION APPARATUS

DISPOSITIF D'AFFICHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2011 DE 102011050870**

(43) Veröffentlichungstag der Anmeldung:
**16.04.2014 Patentblatt 2014/16**

(73) Patentinhaber: **SCHOTT AG**
**55122 Mainz (DE)**

(72) Erfinder:
- **ZENKER, Thomas**
  **55268 Nieder-Olm (DE)**
- **TAPLAN, Martin**
  **55120 Mainz (DE)**
- **OHL, Gerold**
  **55286 Sulzheim (DE)**

- **HEINRICH, Silke**
  **65207 Wiesbaden (DE)**

(74) Vertreter: **Herrmann, Jochen et al**
**Herrmann**
**Patentanwälte**
**Königstrasse 30**
**70173 Stuttgart (DE)**

(56) Entgegenhaltungen:

| | |
|---|---|
| **EP-A1- 1 429 366** | **EP-A1- 1 505 354** |
| **EP-A1- 1 596 499** | **EP-A1- 2 048 781** |
| **EP-A2- 1 607 782** | **DE-A1- 10 309 225** |
| **DE-A1-102008 012 602** | **DE-A1-102008 012 602** |
| **DE-U1-202010 014 361** | **DE-U1-202010 014 361** |
| **JP-A- 2005 093 209** | **US-A- 5 932 128** |
| **US-A1- 2005 252 754** | **US-A1- 2007 108 184** |
| **US-A1- 2007 108 184** | |

**Beschreibung**

Zur Verbesserung der Benutzerführung sind moderne Glaskeramikkochgeräte mit Signallampen oder 7-Segment-Anzeigen ausgerüstet. Die Kochfläche selbst besteht dabei aus einer transparenten, eingefärbten Glaskeramikscheibe (Substrat), die üblicher Weise in Aufsicht schwarz erscheint. Die Signallampen geben dem Benutzer Informationen über den Ein-Zustand des Kochgerätes bzw. einzelner Kochzonen, der Reglerstellung und auch ob die Kochzone nach dem Ausschalten noch heiß ist. Als Leuchtmittel werden üblicherweise LED-Lämpchen eingesetzt.

Aufgrund der Einfärbung der Glaskeramikkochfläche und der sehr begrenzten Auswahl farbiger LED-Anzeigen, ist das zur Verfügung stehende Farbspektrum für die Benutzerinformation sehr stark eingeschränkt. Standardmäßig sind diese Anzeigen rot oder ggf. orange, was sich auch aufgrund der Einfärbung der Glaskeramikkochfläche ergibt. In der DE 100 52 370.6 wird der Transmissionsverlauf für eine Glaskeramikkochfläche beschrieben, die insbesondere auch eine Durchlässigkeit für blaues Licht bei ca. 450 nm zulässt und damit eine erweiterte farbliche Anzeigefähigkeit erlaubt. In der DE 10 2009 013 127.2 sind auf Basis dieser Glaskeramik unterschiedliche Anzeigemöglichkeiten aufgezeigt. Durch die Erweiterung des Transmissionsspektrums auch auf den blauen Wellenlängenbereich ist zwar die Farbgebung der Anzeigen erweitert worden, aufgrund der geringen Anzahl verschiedenfarbiger LED-Anzeigen ist jedoch auch bei dieser GlaskeramicKochfläche die Anzahl der für den Benutzer sichtbaren Farben eingeschränkt. Eine weiße LED würde beispielsweise aufgrund des Transmissionsverlaufes der Kochfläche für den Benutzer mit einem deutlichen Gelbstich wahrgenommen. In der DE 10 2010 061 123.9 wird vorgeschlagen, diesen Mangel durch Verwendung durch RGB-LEDs zu vermeiden. Eine LED-Lampe besteht dabei aus drei LEDs in den Grundfarben rot, grün und blau. Entsprechend der Transmission der Glaskeramikkochfläche wird die Intensität der 3-farbigen LEDs so eingestellt, dass in Summe für den Betrachter ein weißer Farbeindruck des Leuchtsignals entsteht.

Diese Technik benötigt drei LEDs und die zugehörigen Ansteuerungen. Aufgrund der unterschiedlichen Alterung der verschiedenfarbigen LEDs können sich über längere Benutzungszeiten Farbverschiebungen ergeben.

US 2007108184 offenbart ein Kochgerät mit einer eingefärbten Glaskeramik und einer Anzeigevorrichtung.

Aufgabe der Erfindung ist es daher, eine preiswerte und robuste Anzeigevorrichtung zu schaffen, mit transparenter eingefärbter Glaskeramik, um für den Benutzer beliebige und vorher bestimmbare Farbeindrücke zu realisieren.

Die Aufgabe wird mit den Merkmalen des Anspruchs 1 gelöst.

Die Verschiebung des Farbortes des Leuchtmittels durch die Filtereigenschaften der Glaskeramik wird durch die Kombination der Glaskeramik mit einem solchen Kompensationsfilter zu einem gewünschten Farbort korrigiert. Die transparente Zwischenschicht ermöglicht die optische und/oder mechanische Ankopplung des Farb-Kompensationsfilters an die Glaskeramik. Dabei kann die Zwischenschicht so ausgelegt sein, dass sie geometrische Unebenheiten der Glaskeramik ausgleicht, die zu optischen Streuungen des vom Leuchtelement emittierten Lichtes führen. Weiterhin kann die Zwischenschicht auch alternativ oder zusätzlich ein Koppelelement bilden oder ein solches aufweisen, um den Farb-Kompensationsfilter mit der Glaskeramik zu verbinden. Dabei kann die Zwischenschicht auch für das Licht des Leuchtelementes volltransparent sein oder es kann teiltransparent, beispielsweise eingefärbt, sein, um ebenfalls Filterfunktionen zu übernehmen. Zugunsten einer hohen Leuchtkraft auf der Anzeigeseite haben sich nicht eingefärbte Zwischenschichten mit einer Transmission von min. 80% als vorteilhaft erwiesen. Wird die Zwischenschicht als Verbindungselement verwendet, das den Farb-Kompensationsfilter mittelbar oder unmittelbar mit der Glaskeramik verbindet, so kann es beispielsweise vorgesehen sein, dass die Zwischenschicht der Glaskeramik und/oder dem Farb-Kompensationsfilter zugewandt eine Klebeschicht aufweist. Über solche Klebeschichten kann dann eine einfache Ankopplung an die Unterseite der Glaskeramik bzw. an die der Glaskeramik zugewandte Seite des Kompensationsfilters erfolgen. Besonders bevorzugt ist die Zwischenschicht ein Klebeband, das beispielsweise als handelsübliches Standardelement erhältlich ist. Insbesondere kann ein doppelseitiges Klebeband vorgesehen sein.

Alternativ kann die Zwischenschicht auch ein Kleber sein. Dieser kann beispielsweise ein Silikon-, ein Polyurethanharz-, ein Epoxy-Kleber, ein Polyamid-, ein Polyimid- und/oder Mischungskleber aus diesen Materialien oder dergleichen sein. Mit einem solchen Kleber lässt sich einfach eine flächige Verbindung zwischen der Glaskeramik und dem Farb-Kompensationsfilter herstellen. Der Kleber kann volltransparent sein, sodass er den Lichtdurchtritt des vom Leuchtelement emittierten Lichtes nicht beeinflusst. Denkbar ist es jedoch auch, dass der Kleber eingefärbt ist, sodass er selbst Filtereigenschaften übernimmt. Er bildet dann zusätzlich zum Farb-Kompensationsfilter ein zusätzliches Filterelement.

Eine besonders bevorzuge Erfindungsvariante ist dergestalt, dass die Zwischenschicht mit einer Abweichung von ± 20 % den gleichen Brechungsindex wie die Glaskeramik aufweist. Bei einer solchen Ausgestaltung kann die Zwischenschicht eingesetzt werden, um Unebenheiten der Unterseite der Glaskeramik auszugleichen. Der Glaskeramik abgewandt kann dann auf die Zwischenschicht der Farb-Kompensationsfilter flächig aufgebracht werden. Damit beeinflussen dann die Unebenheiten der Glaskeramik-Unterseite den Lichtdurchtritt nicht wesentlich. Bei einer Abweichung des Brechungsindex der Glaskeramik und der Zwischenschicht im Bereich von ± 10% ist der Lichtdurchtritt nur noch so geringfügig beeinflusst, dass dies vorderseitig im Bereich der Anzeigeseite nicht als störend empfunden wird.

Zur Erweiterung der Funktionalität der erfindungsgemäßen Anzeigevorrichtung kann es vorgesehen sein, dass der Farb-Kompensationsfilter und/oder die Zwischenschicht ein oder mehrere Schichtelemente trägt. Diese Schichtelemente können beispielsweise Maskierungen, Raster, Bediensymbole oder dergleichen sein. Die Schichtelemente können separate Bauteile, beispielsweise Folien, darstellen, oder sie können aufgedruckt, gelasert, geätzt, gesprüht oder gesputtert und dergleichen sein. Die Schichtelemente können beispielsweise lichtundurchlässig ausgeführt sein, sodass bei Hinterleuchtung mit dem Leuchtelement diese Schichtelemente den Lichtdurchtritt sperren, was vorderseitig im Bereich der Anzeigeseite zu entsprechenden optischen Gestaltungen führt. Denkbar ist es auch, die Schichtelemente teiltransparent zu gestalten, sodass sie ebenfalls in Form eines Filters gewisse Wellenlängenbereiche des sichtbaren Bereiches ausfiltern. Hierdurch wird dann auf der Anzeigeseite ein anderer Farbeindruck im Bereich der Schichtelemente erzeugt.

Die Schichtelemente können beispielsweise auf der der Zwischenschicht abgekehrten Seite des Farb-Kompensationsfilters angebracht sein. Damit können die Schichtelemente auf einfache Weise vor mechanischer Beanspruchung und Beschädigung geschützt werden.

Der Farb-Kompensationsfilter kann als eine Folie, Matte, Scheibe oder dergleichen Flächenelemente ausgebildet sein. Mit solchen Elementen lassen sich dementsprechend flächige Leuchteindrücke erzeugen. Das für den Farb-Kompensationsfilter verwendete Flächenelement kann mit einer Farbschicht, insbesondere einem Farbauftrag, oder einem farbigen Flächenelement beschichtet sein. Denkbar ist es auch, dass das Flächenelement eingefärbt ist. Solche Flächenelemente lassen sich einfach herstellen. Beispielsweise sind Farb-Kompensationsfilter in Form von Folien kostengünstig als Standardbauteile erhältlich.

Die Zwischenschicht kann als vollflächiger Auftrag zwischen dem Farb-Kompensationsfilter und der Glaskeramik gestaltet sein oder es ist denkbar, dass die Zwischenschicht von einzelnen Teil-Schichtelementen, insbesondere punkt-, streifen- oder rasterförmigen Elementen gebildet ist. Bei einer solchen Gestaltung kann ein Ausgleich von Materialdehnungen, beispielsweise in Form von Temperaturschwankungen erreicht werden.

Vorzugsweise ist die Glaskeramik im Bereich ihrer Beleuchtungsseite als glatte, nicht strukturierte Fläche ausgebildet, sodass störende Lichtbrechungen auf diese Weise vermieden sind.

Eine weitere Funktionsindividualisierung lässt sich bei einer erfindungsgemäßen Anzeigevorrichtung dann erreichen, wenn vorgesehen ist, dass die Zwischenschicht und/oder der Farb-Kompensationsfilter und/oder die Glaskeramik im Bereich ihrer Beleuchtungsseite ein oder mehrere Montage-, Halteteile oder dergleichen trägt. Beispielsweise kann es vorgesehen sein, dass die Montage-, Halteteilte oder dergleichen den Farb-Kompensationsfilter tragen, sodass dieser an die Glaskeramik mittelbar über die Halteteile angekoppelt ist. Die Halteteile können darüber hinaus auch so ausgestaltet sein, dass elektrische Bauelemente, wie beispielsweise das Leuchtelement, Leiterplatten, Sensoren, Schalter oder dergleichen, ankoppelbar sind.

Eine weitere erfindungsgemäße Anzeigevorrichtung kann dergestalt sein, dass der Farb-Kompensationsfilter und/oder die Zwischenschicht und/oder ein weiteres zwischen dem Leuchtelement und der Glaskeramik angeordnetes Zwischenelement mit elektrisch leitfähigen Leiterbahnen versehen ist. Dabei sollte das weitere Zwischenelement vorzugsweise auch zumindest teiltransparent sein. Die elektrisch leitfähigen Leiterbahnen können für die Ansteuerung und/oder Auswertung elektrischer, elektromagnetischer, kapazitiver, induktiver oder optischer Signale verwendet sein. Beispielsweise lassen sich die Leiterbahnen zur Ankopplung von Touchsensoren, Touchfeldern, Elektroden, Bewegungssensoren, Topfsensoren, Flüssigkeitssensoren, Antennen, Bildschirmen, Anzeigen oder dergleichen verwenden. Die Leiterbahnen können beispielsweise derart aufgebracht sein, dass sie eine feine, für das menschliche Auge nicht oder kaum sehbare Struktur bilden oder eine im sichtbaren Wellenlängenbereich quasi transparente Metallflächen bilden.

Eine denkbare Erfindungsvariante ist dergestalt, dass die Montage-, Halteteile oder dergleichen den Farb-Kompensationsfilter und/oder eine elektrische Baueinheit, beispielsweise das Leuchtelement, eine Leiterplatte, einen Sensor oder dergleichen tragen. Auf diese Weise können einfache Flächenstrahler erzeugt werden.

Die Gesamttransmission des Substrates $\tau_{ges}(\lambda)$ setzt sich aus den Transmissionen der Glaskeramik $\tau_{GK}(\lambda)$ und des Kompensationsfilters $\tau_{KF}(\lambda)$ zusammen (Gl. 1).

Die Intensitätsverteilung $i_{LE}(\lambda)$ des Leuchtelementes wird durch das Gesamttransmissionsspektrum $\tau_{ges}(\lambda)$ zu der Intensitätsverteilung $i_A(\lambda)$ der Anzeige verschoben (Gl. 2), die ein Beobachter auf der Anzeigenseite wahrnimmt (Gl. 2).

$$\text{Gl. 1} \qquad \tau_{ges}(\lambda) = \tau_{KF}(\lambda) \cdot \tau_A(\lambda)$$

$$\text{Gl. 2} \qquad i_A(\lambda) = \tau_{ges}(\lambda) \cdot i_{LE}(\lambda)$$

Die einhergehende Verschiebung des Farbortes lässt sich im CIE-Normenvalenzsystem CIExyY (CIE - Commision internationale de l'eclaireage) darstellen. (Für die nachfolgende Beschreibung und deren Beispiele wird in dieser Schrift die Version CIExyY 1931 mit einem 2° Beobachter verwendet.) Das menschliche Auge ist kein spektral kontinuierlicher Lichtsensor, sondern ist aus Farbrezeptoren für begrenzte rote, grüne und blaue Spektralbereiche aufgebaut. Dem entsprechend ist das Sinnesempfinden der L, M, K Zapfen, mit Empfindlichkeiten im roten, grünen und blauen Lichtspektrum. Aufgrund von Testreihen mit Testpersonen wurden im CIE-Formalismus Tristimulusfunktionen $x,y,z$ und deren Integrale $X, Y, Z$ definiert, die als ein Triplett von künstlichen Primärfarben durch deren Kombination den gesamten empfindbaren Farbraum unserer Augen nachbilden können. Dabei entsprechen die $\bar{x}$ und $\bar{z}$ Funktionen nur angenähert der L- und K-Zapfenempfindlichkeit. Die $\bar{y}$ Funktion ist so konstruiert, dass sie das Helligkeitsempfinden bei Tag nachbildet und entspricht nahezu der M-Zapfenempfindlichkeit. Mit Gl. 3 und Gl. 4 ist der empfundene Farbort hierbei durch die normierten Werte x und y eindeutig beschrieben, Y ist ein Maß für die Helligkeit. Der CIExyY Formalismus beschreibt Selbstleuchter, optional durch absorbierende Medien hindurchleuchtend, deren in das Auge fallende Lichtspektrum in die normierten X. Y, Z CIE-Koordinaten transformiert wird, die dann den Farbort und die Helligkeit des Selbstleuchters beschrieben.

$$\text{Gl. 3} \qquad A = \frac{1}{N}\int \bar{a}(\lambda)\cdot\tau(\lambda)\cdot i(\lambda)\cdot d\lambda \ \text{ mit } A = X,Y,Z \ \text{ und } \ \bar{a} = \bar{x}, \bar{y}, \bar{z}$$

$$\text{mit } N = \int \bar{y}(\lambda)\cdot i(\lambda)\cdot d\lambda$$

$$\text{Gl. 4} \qquad x = \frac{X}{S}, \quad y = \frac{Y}{S}, \quad z = 1 - x - y \ \text{ mit } S = X + Y + Z$$

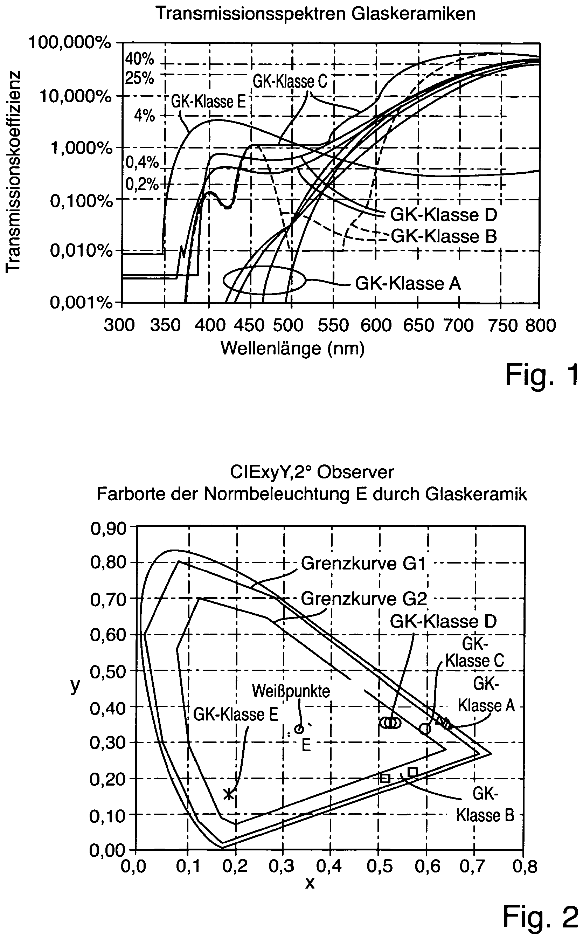

Voraussetzung zur Erreichung eines gewünschten Anzeigefarbortes im roten bis blauen Spektralbereich für einen Beobachter mittels eines Kompensationsfilters und mittels vorzugsweise eines kommerziell üblichen und kostenverträglichen Anzeigenleuchtelementes sind minimale Transmissionswerte des Substrates im Spektralbereich aller drei L, M, K Zapfen, bzw. aller drei $\bar{x},\bar{y},\bar{z}$ CIE-Primärspektren. In Figur 1 sind typische Transmissionsspektren verschiedener Glaskeramiktypen (Klassen) dargestellt, die üblicherweise für Kochflächen Verwendung finden. Hierbei handelt es sich um die derzeit am weitesten verbreiteten mit Vanadium (V) eingefärbte Glaskeramiken Typ A (beispielsweise CERAN SUPREMA ®, CERAN HIGHTRANS ®, KeraBlack®), um Glaskeramiken mit Einfärbung durch Co, Fe, Ni (Typ B, beispielsweise CERAN COLOR ®), durch V, As und Fe (Typ C, China), durch V, Fe (Typ D, beispielsweise CERAN HIGHTRANS eco ®, und solche durch Einfärbung mit $Ti^{3+}$ mittels reduzierender Läuterung (beispielsweise ZnS-Läuterung), dem Typ E.

Um mit handelsüblichen Leuchtmitteln (beispielsweise LEDs) durch die Glaskeramik hindurch auf der Anzeigenseite genügend helle Farbeindrücke im blauen bis roten Spektralbereich hervorzurufen, sind Glaskeramiken erforderlich, die eine mittlere Transmission von >0,2%, vorzugsweise von >0,4%, jeweils für jeden der Spektralbereiche von 420-500nm, 500-620 nm und 550-640 nm aufweisen. Wie in Figur 1 nachzuvollziehen ist, erfüllen diese Bedingung die neueren Glaskeramikklassen D und E, mit Einschränkungen auch Klasse C. Die bisherige, weit verbreitete Glaskeramikklasse A erfüllt diese Bedingung nicht. Mit dieser Glaskeramik sind auch erfindungsgemäße Farbortverschiebungen über den gesamten sichtbaren Spektralbereich mit üblichen Leuchtmitteln und Filtern unmöglich, insbesondere auch keine Weißkompensation. Andererseits darf auch die spektrale Transmission nicht zu hoch sein, um ohne zusätzliche Hilfsmittel, wie lichtdichte Unterseitenbeschichtungen, ein Einblick in den Innenaufbau der Kochfelder zu verwehren und eine ästhetisch bevorzugte, farbig gleichförmige, nicht transparente Kochfläche darzustellen. Diese maximale Transmission definieren wir mit < 40%, vorzugsweise < 25 % bei 400 nm und 700 nm, und zusätzlich im Mittel von <4% zwischen 450-600nm. Wie in Figur 1 nachzuvollziehen ist, erfüllen diese zweite Bedingung alle aufgezeigten Glaskeramikklassen außer der Klasse C, die in der Praxis zu transparent erscheint, um einen Einblick in das Innenleben eines Kochfeldes zu verhindern. Eine weitere, dritte Bedingung ergibt sich aus der Machbarkeit einer Farbverschiebung zu einem weißen Farbeindruck eines handelsüblichen Leuchtmittels durch eine Glaskeramikkochfläche und eines nicht zu aufwendigen Kompensationsfilters. Hierzu dürfen die Transmissionsunterschiede in den drei spektralen Sinnesbereichen nicht zu groß sein. Dies wird in Figur 2 dargestellt. Die Farborte der Normbeleuchtung durch erfindungsgemäße Glaskeramiken sollten innerhalb einer Grenzkurve G1, vorzugsweise einer Grenzkurve G2 liegen. Die Eckkoordinaten zu den Grenzkurven G1 und G2 sind in Tabelle 2 aufgelistet.

Nimmt ein Beobachter ein Lichtreiz wahr, der aus zwei Lichtsignalen besteht, die räumlich nebeneinander liegen, aber mit dem Auge räumlich nicht auflösbar erscheinen, und die durch die Intensitätsverteilung der Leuchtelemente und durch Filtertransmissionen beschrieben sind, so addiert sich der wahrgenommenen Sinnesreiz linear (Gl. 5), und der summarische Farbort (x,y) liegt im Chromatizitätsdiagramm CIExyY auf einer Geraden zwischen den Farborten $(x_1,y_1)$ und $(x_2,y_2)$, der zwei Lichtsignale (Gl. 6). Im speziellen Fall gleicher Intensitäten (Gl. 7) liegt (x,y) in der Mitte zwischen den Farborten der beiden Lichtsignale (Gl. 8).

$$\text{Gl. 5} \qquad A = \frac{1}{N} \int \overline{a}(\lambda) \cdot \left( \tau_1(\lambda) \cdot i_1(\lambda) + \tau_2(\lambda) \cdot i_2(\lambda) \right) \cdot \cdot d\lambda = A_1(\tau_1, k_1 i) + A_1(\tau_2, k_2 i)$$

mit $i_1 = k_1 \cdot i$, $i_2 = k_2 \cdot i$, $k_1 + k_2 = 1$

$$\text{Gl. 6} \qquad x = k_1 x_1 + k_2 x_2$$

mit $x_i = f(\tau_i, i)$, y,z entsprechend.

$$\text{Gl. 7} \qquad k_1 = k_2 = \frac{1}{2}$$

$$\text{Gl. 8} \qquad x = \frac{x_1 + x_2}{2}, \quad y = \frac{y_1 + y_2}{2}, \quad z = \frac{z_1 + z_2}{2} = 1 - x - y \; .$$

Dieser lineare Zusammenhang ist auch bekannt aus Farbdiagrammen zum Beispiel zu Bildanzeigen, wie CRT oder LCD Monitoren, bei denen mögliche wahrnehmbare Farborte im CIExyY Diagramm in einem Dreieck zwischen den Farborten der drei Primärfarben des Anzeigegerätes liegen, i.a. ein RGB-Farbraum, oder in einem Farbpolygon bei mehr als drei Primärfarben. Hierbei berechnet sich der Farbort aus der linearen Kombination dreier oder mehrerer Primärintensitäten gemäß (Gl. 6).

In der erfindungsgemäßen Anwendung zweier hintereinander angeordneter Filter, eines Substrates (beispielsweise Glaskeramik) und eines Kompensationsfilters ist der Zusammenhang nicht mehr linear gegeben wie Gl. 9 im Vergleich zu Gl. 5 verdeutlicht. In Gl. 9 können für $\tau_1(\lambda)$ und $\tau_2(\lambda)$ zum Beispiel aus Gl. 1 die Transmissionspektren der Glaskeramik $\tau_{GK}(\lambda)$ und des Kompensationsfilters $\tau_{KF}(\lambda)$ eingesetzt werden.

$$\text{Gl. 9} \qquad A_{12} = \frac{1}{N} \int \overline{a}(\lambda) \cdot \tau_1(\lambda) \cdot \tau_2(\lambda) \cdot i(\lambda) \cdot \cdot d\lambda$$

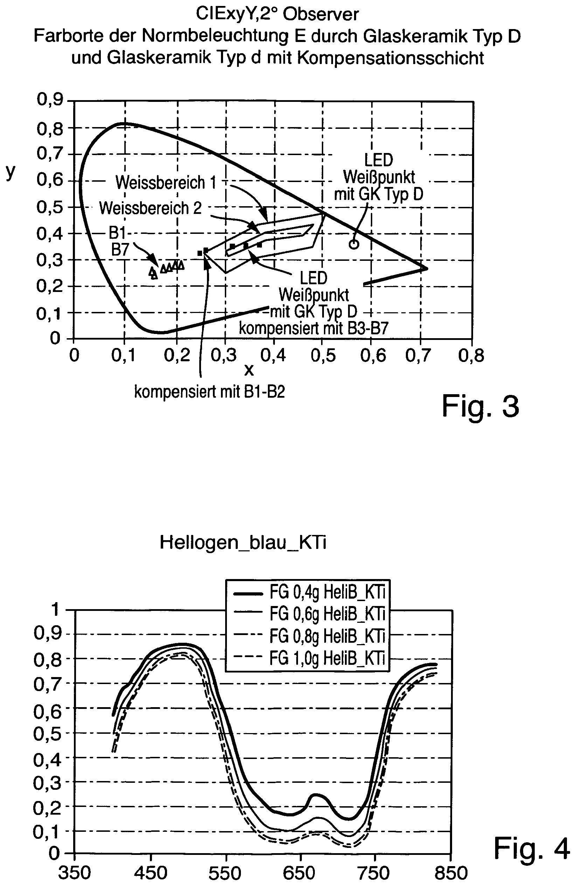

Der Farbort des Leuchtelementes durch die hintereinander angeordneten Filter liegt nicht mehr notwendigerweise auf einer Geraden zwischen den Farborten des Leuchtelementes durch die einzelnen Filter. Umgekehrt führt dies zu dem Phänomen, dass derselbe gemeinsame, erfindungsgemäß kompensierte Farbort eines Leuchtelementes durch eine Glaskeramik mit verschiedenen Kompensationsfiltern erreicht werden kann, wobei der Farbort des Leuchtelementes durch die einzelnen Kompensationsfilter je nach spektraler Verteilung nicht identisch sein muss. In Figur 3 sind die Farborte des Normlichtes E einzeln durch eine Glaskeramik vom Typ D und einzeln durch verschiedene Farbfilter B1-B7, die jeweils in Kombination mit der Glaskeramik hintereinander angeordnet das Normlicht an demselben Gesamtfarbort erscheinen lassen. In dem gezeigten Beispiel sind die Farbfilter so konstruiert, dass der Gesamtfarbort für den Beobachter am Unbuntpunkt E (Grau- oder Weißpunkt E) liegt.

Mit einem erfindungsgemäßen Kompensationsfilter ist es, wie beschrieben, somit möglich die Verschiebung des ursprünglichen Farborts des Leuchtmittels durch das eingefärbte Substrat wieder zu kompensieren, im speziellen zu einem weißen Farbort. Eine weitere erfindungsgemäße Anwendung ist, den Farbort des Leuchtmittels auf der Anzeigenseite des Substrates zu einem gewünschten Farbort zu verschieben, der verschieden zum ursprünglichen Farbort des Leuchtmittels ist. Die kombinierte Verschiebung des Farbortes durch das Substrat und den Filter kompensiert sich hierbei gewollt nicht. Hiermit kann man zum einen Farborte erzeugen die beispielsweise durch verfügbare, feste Wellenlängen handelsüblicher LEDs nicht dargestellt werden können, beispielsweise ein Farbort der zwischen dem einer gelben und orangen LED liegt. Dies ist z.B. für die Identifizierung, Differenzierung und Vermarktung von Produktlinien vorteilhaft. Zum anderen können Leuchtelement einheitlich und damit mit Kostenvorteil mit einer Sorte nichtmonochromatischer, sondern spektral breit emittierender, farbiger Leuchtmittel aufgebaut sein (in der Erfindung weiße LEDs, nicht zur Erfindung gehörend Leuchtstoffröhren). Durch Anwendung verschiedener erfindungsgemäßer Farbfilter lassen sich verschiedene Farborte für verschiedene Produktlinien oder gleiche Farborte einer Produktlinie kombiniert mit verschieden eingefärbten Substraten erzeugen. Farbortverschiebungen und Kompensationen sind insbesondere für spektral breitbandige Leuchtmittel anwendbar, wie 2. in der Erfindung weiße LEDs, 2. bzw. nicht zur Erfindung gehörend Leuchtstoffröhren oder Mischfarben von kombinierten einfarbigen LEDs, beispielsweise RGB-LEDs. Einfarbige, nahezu monochromatische Leuchtmittel, beispielsweise wie rote, blaue, grüne LEDs, erfahren als Einzelfarbe eingesetzt im Allgemeinen keine merkliche Farbortverschiebung durch Filter.

Erfindungsgemäß den Farbort eines Leuchtmittels zu Weiß zu kompensieren, heißt nicht, genau den Unbuntpunkt E zu treffen. Stattdessen toleriert das Auge einen weiten Farbortbereich als Weißeindruck. Dies hängt unter anderem auch von den Farborten der umgebenden Oberflächen ab, wie einer rot-schwarzen Kochfeldoberfläche. Bevorzugt kann es daher vorgesehen sein, zur Weiß-Kompensationen eines beliebigen Leuchtelementes einen Farbort zu erreichen, der vorzugsweise in den Grenzen des Weißbereiches W1, vorzugsweise des Weißbereiches W2 liegt. Der Weißbereich W2 umschließt hierbei die im ANSI definierte Weißfelder (ANSI binning) 1A, ..., 1D, ..., 8D, die typischerweise von LED-Herstellern herangezogen werden, um die Farb-orte ihrer weißen LEDs zu charakterisieren. Dieser Bereich entspricht Farbtemperaturen von 2580K bis 7040K (CCT, color correlated temperature), entsprechend einem Weißeindruck von Warmweiß bis Kaltweiß. Die Eckpunkte der erfindungsgemäß definierten Weißbereiche W1 und W2 in Figur 3 sind in Tabelle 1 aufgelistet. Selbstverständlich kann auch eine Weiß-Kompensation in einem Bereich außerhalb der Bereiche $W_1$ oder $W_2$ vorgenommen werden. Beispielsweise kann eine Weiß-Kompensation auch bis 15000 K (CCT, color related temperature) im Rahmen der Erfindung vorgenommen werden. Dieser "kalt-weiße" Bereich (zwischen 10000 K und 15000 K wird allerdings von den Anwendern teilweise vom Leuchteindruck mitunter als "hart" empfunden. Denkbar sind auch Farbtemperaturen bis hinunter zu 2000K. Solche Leuchteindrücke werden mit einem Gelbstich wahrgenommen.

Erfindungsgemäß ist die Farbortkompensation nicht auf die Beispielbeschichtungen 1-4 oder die Normlichtquelle E beschränkt. Vorzugsweise werden in einer Anwendung kommerziell erhältliche und kostengünstige Leuchtmittel, gemäß der Erfindung weiße LEDs eingesetzt werden. Andersfarbige nicht monochromatische Leuchtmittel, wie beispielsweise Leuchtstoffröhren oder weiterhin beispielsweise eine Kombination aus blauen, grünen und roten LEDs (RGB-Leuchtmittel), die beispielsweise als Hinterleuchtung von LCD-Anzeigen auf einen festen Farbort eingestellt sind oder eine Farbdarstellung der Anzeige steuern, welche nicht Gegenstand der Erfindung sind, können eingesetzt werden, um mittels entsprechend aufgebauter Kompensationsfiltern auf der Anzeigenseite des Kochfeldes zu den ursprünglichen Farbort der Leuchtmittel zu kompensieren oder speziell einen weißen Farbeindruck oder auch einen beliebigen Farbeindruck zu erzeugen.

Erfindungsgemäß ist die Farbortkompensation nicht auf einen weißen Farbort beschränkt. Es kann jeder gewünschte Farbort mit einem entsprechenden Kompensationsfilter eingestellt werden, zum Beispiel Markengeräte-spezifische Farben für Anzeigen oder Firmenlogos, oder auch verschiedene Farborte zur benutzerfreundlichen Unterscheidung von Warnmeldungen, Hinweisen oder Benutzerhilfen, oder verschiedene Farborte für verschiedene Leistungsstufen bei Kochgeräten. Dies kann in vielfältigen Beispielen Anwendung finden, die zur leichteren Benutzerführung, Statusanzeigen oder verschiedenes Ambiente einer Schmuckbeleuchtung dienen.

Denkbar sind auch Mehrfarbendrucke zur Erzeugung mehrfarbiger Leuchtdarstellungen oder farbiger Symboldarstellungen.

Die Farbschicht erlaubt durch verschiedene Beschichtungsverfahren, wie z.B. Siebdruck, eine scharfe Abgrenzung des Signalfeldes und Abschirmung von Streulicht, sowie eine Darstellung von Zeichen Symbolen oder Schriftzügen, die im Ein-Zustand der Beleuchtung für den Benutzer sichtbar sind und im Aus-Zustand vom Benutzer nicht wahrnehmbar sind. Selbst die Position dieser Markierungen / Logos ist im Aus-Zustand nicht erkennbar, wodurch die einfarbige edle Anmutung der Glaskeramikoberfläche für den Benutzer erhalten bleibt. Dieser Effekt wird als Deadfront-Effekt bezeichnet und von Designern oftmals gewünscht, da dadurch das Kochgerät in der Gesamtästhetik deutlich aufgewertet wird. Dieser Deadfront-Effekt ist beispielsweise bei den insbesondere in Japan bekannten transparenten Glaskeramikkochflächen nur mit erheblichem zusätzlichem Aufwand möglich. Aufgrund der hohen Transparenz dieser Kochflächen sind Display-Anzeigen oder Lämpchen direkt bzw. deutlich sichtbar was teilweise als störend empfunden wird. Im Gegensatz zu diesen transparenten Kochflächen können die dunkel eingefärbten Kochflächen weiterhin auch mit leistungsstarken Strahlungsheizkörpern kombiniert werden, wodurch mit dem vorgeschlagenen Verfahren die Glaskeramikkochgeräte mit Strahlungsheizkörpern bzw. Halogenheizkörpern in der Benutzerführung deutlich aufgewertet werden.

Im Rahmen der Erfindung kann es insbesondere vorgesehen sein, dass die Farbschicht als Farbauftrag aufbeschichtet, insbesondere auf einen transparenten Träger, insbesondere einem Folienträger, aufgebracht ist und/oder auf die Glaskeramik aufbeschichtet ist, und/oder, dass die Farbschicht zwischen zwei transparenten Trägern, insbesondere zwei Folienträgern, gehalten ist, und/oder dass die Farbschicht von einem zumindest bereichsweise durchgefärbten Träger, insbesondere Folienträger, gebildet ist. Der transparente Träger oder der durchgefärbte Träger kann beispielsweise aus einem Folienmaterial bestehen. Bei der Anwendung in Verbindung der Glaskeramik als Kochfläche eigenen sich insbesondere Folienmaterialien aus Polyethersulfon (PES), Polycarbonat (PC) oder aus Polyethylenterephtalat (PET). Diese Materialien sind ausreichend temperaturfest. Die Verwendung eines Folienmaterials hat den Vorteil, dass diese Materialien kostengünstig beziehbar sind und weiterhin eine gleichmäßige flächenförmige Hinterlegung der Glaskeramik ermöglichen. Geeignet sind insbesondere auch Dünnglasfolien.

Die Abbildungsschärfe auf der Oberseite von feinen Linien und Schriftzügen ist bei Einsatz der üblicherweise auf der Unterseite genoppten Glaskeramikkochflächen ohne optisch störende Verzerrungen möglich, indem auf die Noppen eine brechzahlangepasste Ausgleichsschicht aufgetragen wird. Dies ist ein weiterer deutlicher Vorteil gegenüber der im US-Patent US 6369365 beschriebenen aufgedruckten Maskierung auf einer genoppten Unterseite. Durch die direkte Bedruckung der genoppten Unterseite kommt es zu stark störenden Verzerrungen, wodurch nur sehr große grobe Fenster und Symbole dargestellt werden können. Die Kochflächendicke beträgt üblicherweise 4 mm, in kommerziellen Anwendungen auch bis zu 6mm. Zur Erhöhung der Farbintensität bzw. Leuchtstärke ist es auch vorstellbar, Kochflächen mit einer reduzierten Dicke von beispielsweise 3 mm einzusetzen.

Neben dem hier aufgezeigten Hauptanwendungsfeld für Beleuchtungen mit Einzel-LEDs oder 7-Segmentanzeigen ist dieses System selbstverständlich auch für jede beliebige andere Lichtquelle und Darstellungsform geeignet, es können beispielsweise als Lichtquelle auch Halogenlampen, Leuchtstäbe, Faseroptiken oder Leuchtstoffröhren eingesetzt werden. Neben Leuchtpunkten oder 7-Segment-Anzeigen sind auch Balkenanzeigen oder Leuchtkennzeichnungen zur Kochzonenidentifizierung oder Markierung vorstellbar oder Ausleuchtung von größeren Kochzonenflächen oder Umrandungen. Weiterhin sind erfindungsgemäße Farbortkompensationen oder Verschiebungen auch für Hintergrundbeleuchtungen von alphanumerischen oder graphischen Displays, beispielhaft LCD-Anzeigen, anwendbar. Neben den bevorzugten Einsatz in Glaskeramikkochgeräten kann dieses System auch im Panelbereich von Backöfen oder Dominokochgeräten einschließlich Grillplatten eingesetzt werden. Bekannt sind beispielsweise auch Kaminverkleidungen aus Glaskeramik. Auch bei diesen Kaminverkleidungen ist eine Beleuchtung mit dem vorgeschlagenen System zur Verbesserung des Benutzerkomforts möglich. Die Kochfläche kann plan, gebogen oder komplex verformt ausgebildet sein. Als Beheizung für die Kochstellen sind Gasbrenner, Induktionsspulen oder Strahlungsheizkörper bzw. Halogenheizkörper vorstellbar.

Entscheidend für den farblich gewünschten Gesamteindruck ist ein entsprechender Transmissionsverlauf, der sich aus den Transmissionsverläufen des Substrates und des Farbfilters (Farbschicht) ergibt. Da der Transmissionsverlauf des Substrates "vorgegeben" ist, kann die Korrektur nur über die Farbschicht erfolgen.

Der Korrekturfiltereffekt der Farbschichten wird durch den jeweiligen Transmissionsverlauf im sichtbaren Bereich bestimmt, durch folgende wesentliche Parameter:

- Lage des Transmissionsmaximums
- Breite des Transmissionsmaximums
- Intensität des Transmissionsmaximums

Die Lage und Breite des Transmissionsmaximums wird durch die Farbzusammensetzung bestimmt, insbesondere durch die farbgebenden Pigmente. Die Intensität hingegen wird durch die Schichtdicke der Farbe und die Konzentration des Farbstoffes bzw. des Farbpigments in der Farbmatrix bestimmt.

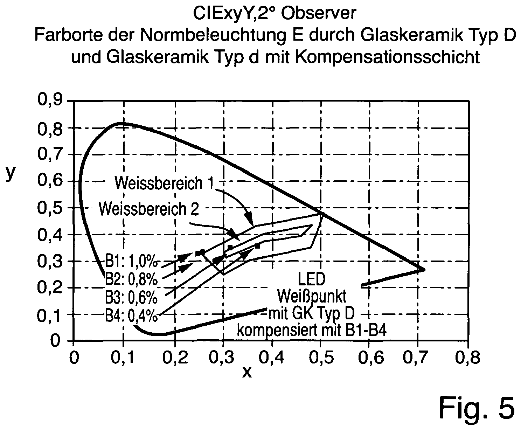

So sind in Figur 4 und Figur 5 verschiedene Farbfarbstoffkonzentrationen in Abhängigkeit der Transmission (Figur 4) und des Farbortes (Figur 5) dargestellt, wobei in Figur 4 die Spektren B1 bis B4 optimiert zur Kompensation der Normlichtquelle E für den Glaskeramiktyp D und in Figur 5 die Konzentrationsverläufe B1 bis B4 dargestellt sind. Durch eine gezielte Auswahl der Farbstoff und/oder Pigmentkonzentration kann der Farbort in den gewünschten Bereich eingestellt werden.

Die Farbschicht mit 1% und 0,8% Heliogenblau (B1 bzw. B2) liegen am Rande des Weißbereiches W1. Hingegen B3 mit 0,6% Heliogenblauanteil in der Farbmatrix liegt am oberen Ende des Weißbereiches W2 und B4 mit 0,4% desselben Blaufarbstoffes unterhalb von W1. Durch die Lage der Punkte B1-B4 in der Farbortgraphik (Abb.5) wird gezeigt, dass der gewünschte Farbort durch eine gezielte Einstellung der Pigmentkonzentration möglich ist. Die Farbstoff bzw. Pigmentkonzentration in der fertig eingebrannten Farbschicht kann durch die Schichtdicke und/oder durch die Farbstoff und/oder Pigmentkonzentration in der Farbmatrix auf das jeweilige Substrat angepasst werden.

Die Farbschicht kann aus verschiedenen Farbsystemen hergestellt werden. Zum einen eignen sich organische Farbsysteme z.B. für Niedrigtemperaturanwendungen, zum anderen anorganische Farbsysteme auch für Hochtemperaturanwendungen bzw. Mischungen derselben.

Wie vorstehend ausgeführt, kann der angepasste Transmissionsverlauf durch Farbschichten, die aus Farbmatrix und/oder Farbstoffen und/oder Farbpigmenten besteht, erreicht werden. Als Farbstoffe/Farbpigmente werden organische und anorganische Farbstoffe und/oder Farbpigmente verwendet, bevorzugt absorbierende organische und anorganische Farbstoffe/Farbpigmente, besonders bevorzugt blaue, grüne und blaugrüne Farbstoffe/Farbpigmente. Von den BlauGrünen Farbstoffe/Farbpigmenten werden solche Farbstoffe/Farbpigmente bevorzugt, deren Transmissionsmaximum im Bereich von 400-600 nm liegt, besonders bevorzugt im Bereich 450-550 nm. Als Farbstoffe werden beispielsweise eingesetzt Eisencyan-Komplexe, Indanthron, Indigo, Kupferphthalocyanine, bevorzugt die ß-Form der Kupferphthalocyanine, Chrom-Chelate, vorzugsweise Cr3+ mit Liganden aus der Azo- und Azomethinreihen z.B. Heliogenblau 23050.

Als Farbpigmente werden beispielsweise Cobalt-Zinn-Oxid-Verbindungen (Mischoxide), Aluminiumsilikate bevorzugt schwefelhaltige Aluminiumsilikate (z.B. Ultramarinblau, -grün), Zirkonsilikate, bevorzugt mit Vanadiumzusatz, besonders bevorzugt mit 1,5% Vanadiumzusatz, Zirkonsilikat-Vanadiumoxide, Calcium-Kupfer-Silikate, bevorzugt CaCuSi4O10, Kupfercarbonatverbindungen 2CuCO3*Cu(OH)2, Cobalt-Aluminium-Oxid-Verbindungen, bevorzugt als Cobalt-Aluminat (Cobalt-Aluminium-Spinell; Colour Index Blau 28), und Cobalt-Chrom-Oxid-Verbindungen, bevorzugt als Cobalt-Chromit (Cobalt-Chrom-Spinell; Colour Index Blau 36), verwendet.

Diese Pigmente werden bevorzugt als Nanopartikel eingesetzt. Als besondere Ausführung können die genannten Pigmente auch als Streupartikel appliziert werden.

Die Farbmatrix kann aus organischen und / oder anorganischen Komponenten bestehen. Die organische Farbmatrix besteht aus einem Binder, Lösungsmittel und Zusätzen wie Härter, Vernetzer, Verlaufsmittel, Additive, Entschäumer, sauren und/oder basischen und/oder kationischen und/oder anionischen und/oder radikalischen Polymerisations-Startern.

Als Binder können Kautschuk, Polyurethanharze, Silicone (org. und/oder anorganisch vernetzend), Sol-Gel-Verbindungen, Hybrid-Polymere, acrylatbasierende Systeme, bevorzugt Methacrylate, Epoxide, Polyamide, Polyimid und Mischungen derselben verwendet werden. Diese Binder können mit und ohne Nanopartikel eingesetzt werden.

Insbesondere kann die Beschichtungszusammensetzung Sol-Gel-Vorstufen des Siliziums, Titans, Zirkons, Aluminiums, Zinks, Magnesiums, Calciums, Zinns oder Mischungen davon umfassen. Ganz besonders bevorzugt sind die Sol-Gel-Vorstufen SiORxRy, TiORxXy, ZrORxXy, AlORxXy, ZnORxXy, MgORxXy, CaORxXy und SnORxXy.

In einer Ausführungsform ist die Partikelgröße der Sol-Gel-Vorstufe und/oder metallorganischen und/oder anorganischen Nanopartikel in einem Bereich von 0,05 bis 200 nm, besonders bevorzugt von 1 bis 100 nm. Die Partikelform kann dabei insbesondere sowohl kugelförmig als auch irregulär als auch kettenförmig sein.

In einer besonders bevorzugten Ausführungsform umfasst die Beschichtungszusammensetzung eine UV-härtbare und/oder thermisch -härtbare hybridpolymere, hydrolysierte und kondensierte Alkoxysilanvorstufe, insbesondere Glycidylpropyloxyltriethoxysilan und/oder Methacryloxypropyloxytrimethoxysilan welche ferner mit Polysiloxanen funktionalisiert werden kann. Bevorzugt werden Methyl und/oder Phenylfunktionalisierte Polysiloxane verwendet. Die Sol-Gel-Schicht auf der Glaskeramik umfasst also vorzugsweise die Reaktionsprodukte hierin beschriebener Sol-Gel-Vorstufen mit hierin beschriebenen Polysiloxanen.

In einer besonderen erfindungsgemäßen Ausführungsform enthält die Beschichtung anorganische Nanopartikel. Die Nanopartikel verbessern beispielsweise die Kratzfestigkeit der Beschichtung.

In dieser besonderen Ausführungsform werden anorganische Nanopartikel der Beschichtungslösung zugegeben. Bevorzugt beträgt der Volumenanteil der Nanopartikel an der Beschichtungszusammensetzung mehr als 10%, weiter bevorzugt mehr als 20%. Die Nanopartikel werden bevorzugt als alkoholische Dispersion zugesetzt.

Bevorzugt umfasst die Beschichtungszusammensetzung auch Nano-Partikel in Form von amorphen oder nanokristallinen Metalloxiden. Bevorzugte Metalloxide sind Siliziumoxid (SiO2), Titandioxid (TiO$_2$), Zirkondioxid (ZrO$_2$), Y2O3 stabilisiertes Zirkonoxid, Aluminiumoxid (Al$_2$O$_3$), Zinkoxid (ZnO) und Indiumzinnoxid (ITO). Vorzugsweise können auch deren hybridpolymere Derivate oder Verbindungen eingesetzt werden. Die Metalloxide können in Form von Partikeln und/oder metallorganischen Polymeren vorliegen.

Als Lösungsmittel werden beispielsweise Terpeniol, n-Butylacetat, Carbitol, Carbitolacetat, Etylenglykolmonoethylether und Mischungen derselben eingesetzt. Insbesondere für Siebdruck geeignete Farbmatrix benötigt hochsiedende Lösungsmittel mit einem Dampfdruck < 5 hPa, bevorzugt < 2 hPa, besonders bevorzugt < 1 hPa. Zusätzlich können Härter z.B. zur Erhöhung der Schichthärte/Kratzbeständigkeit zugefügt werden, beispielsweise Nanopartikel, Bisepoxide. Je nach Beschichtungsverfahren können auch noch verschiedene Benetzungs-/Verlaufsmittel zugegeben werden, beispielsweise PEG, BYK 302, BYK 306, um homogene Schichtdicken zu erreichen.

Die Bestandteile der Farbmatrix und die Farbstoffe und/oder Farbpigmente werden homogenisiert, vorzugsweise mittels Dispermat (Ultraturax) oder Dreiwalzenstuhl.

Es werden verschiedene Beschichtungsverfahren angewendet, beispielsweise Druckverfahren wie Ink-Jet-Druck, Off-Set-, Tampon-Druck, Rollcoating, bevorzugt Siebdruck; Tauchverfahren, Spin-coating, Sprühverfahren. Für diese Beschichtungsverfahren muss die Viskosität der Farbmatrix auf die Verarbeitbarkeit /Druckbarkeit angepasst werden, insbesondere für das bevorzugte Siebdruckverfahren das Thixotropieverhalten. Dafür werden u.a. als organische Eindicker Cellulose-Verbindungen, Polyvinylpyrilidon, Polyethylenglykol, Block-CoPolymere, als anorganische Eindicker: Aerosile, flammenpyrolytische bzw. per Fällungsprozess hergestellte SiOx bzw. AlxOy-Partikel verwendet.

Nach der Beschichtung werden die Farbschichten beispielsweise thermisch gehärtet und/oder UV gehärtet.

Für den erfindungsgemäßen Filtereffekt der Farbschichten sind homogene Schichtdicken vorteilhaft, sodass die Schwankungen der Schichtdicke < 3 $\mu$m liegen, bevorzugt < 1 $\mu$m ganz besonders bevorzugt < 0,5 $\mu$m. Daher werden beidseitig glatte Oberflächen bevorzugt. "Glatt" bedeutet in diesem Zusammenhang, dass die Ober- und Unterseite des Farb-Kompensationsfilters etwa die gleiche Oberflächengeometrien aufweisen und die Unterseite nicht die übliche Noppenstruktur aufweist.

Insbesondere bei nicht glatten Oberflächen, z.B. genoppten Oberflächen kann direkt auf die Oberfläche eine vorzugsweise brechzahlangepasste Ausgleichsschicht aufgetragen werden, die beispielsweise aus Polyurethanharzen, Silicone (org. und/oder anorganisch vernetzend), Sol-Gel-Verbindungen, Hybrid-Polymere, Acrylatbasierende Systeme, bevorzugt Methacrylate, Epoxide, Polyamide, Polyimid und Mischungen derselben bestehen. Diese Ausgleichsschicht kann mit und ohne Nanopartikel eingesetzt werden. Auf diese Ausgleichsschicht wird dann die bereits beschriebene Farbschicht aufgebracht.

Gemäß einer weiteren Ausgestaltungsvariante der Erfindung kann es vorgesehen sein, dass die Ausgleichsschicht die Farbschicht mit der Glaskeramik mittelbar oder unmittelbar verbindet, insbesondere verklebt, oder dass die Ausgleichsschicht einen die Farbschicht aufweisenden Träger mit der Glaskeramik verbindet.

Ausführungsbeispiel 1: dunkle Glaskeramik mit genoppter Unterseite

Herstellung Bindemittel A

Es werden 0,08 mol GPTES (Glycidyloxypropyltriethoxysilan) mit 0,02 mol TEOS (Tetraethoxysilan) mit 0,125 mol Paratoluolsäure versetztem Wasser hydrolysiert. Anschließend wird das Lösungsmittel am Rotationsverdampfer entfernt und 22,6 g Binder erhalten.

Herstellung Bindemittel B

Es werden 0,04 mol MPTMS (Methacryloxypropyltrimethoxysilan) mit 0,02 mol TEOS (Tetraethoxysilan) mit 0,04 MTEOS (Methyltriethoxysilan) mit 0,125 mol Paratoluolsäure versetztem Wasser hydrolysiert. Anschließend wird das Lösungsmittel am Rotationsverdampfer entfernt.

Als Nanopartikelhaltige Lösung wird eine käuflich erhältliche Dispersion von 15 nm großen $SiO_2$ - Partikel in Diethylenglycolmonopropylether eingesetzt.

Die Starterlösung enthält 50 mass-% an thermisch aktivierbarem Starter Methylimidazol in Ethylenglycolmonopropylether.

Auf eine genoppte dunkle Glaskeramik vom Typ CERAN HIGHTRANS eco® wurde per Siebdruck eine Ausgleichsschicht mit einer Schichtdicke kleiner 0,5 mm aus Polyurethanharz mit einem Lichtbrechungsindex von 1,59 gedruckt und anschließend thermisch gehärtet. Die Schichtdickenschwankung lag bei < 3 $\mu$m. Auf diese Ausgleichsschicht wurde eine Farbe mittels Siebdruckverfahren gedruckt, die aus folgenden Komponenten bestand:

    32 % Bindemittel A
    60 % Nanopartikelhaltige Sol-Gel-Lösung
    2% Starterlösung
    6% Spritblau 94030

Die Trocknung erfolgte bei 3 min UV-Strahlung.

Die Schichtdickenschwankung lag bei < 3 $\mu$m; das Licht einer weißen LED wurde homogen weiß angezeigt.

Ausführungsbeispiel 2: dunkle Glaskeramik mit genoppter Unterseite

Auf eine genoppte dunkle Glaskeramik vom Typ CERAN HIGHTRANS eco® wurde per Siebdruck eine Ausgleichsschicht aus Polyurethanharz (gemäß Ausführungsbeispiel 1) gedruckt und anschließend thermisch gehärtet. Die Schichtdickenschwankung lag bei < 3 $\mu$m. Auf diese Ausgleichsschicht wurde eine Farbe mittels Siebdruckverfahren gedruckt, die aus folgenden Komponenten bestand:

    32 % Bindemittel B
    60 % Nanopartikelhaltige Sol-Gel-Lösung
    2% Starterlösung
    6% Spritblau 94030

Die Trocknung erfolgte bei 60 min IR-Strahlung kombiniert mit Umluft.

Die Schichtdickenschwankung lag bei < 3 $\mu$m; das Licht einer weißen LED wurde homogen weiß angezeigt.

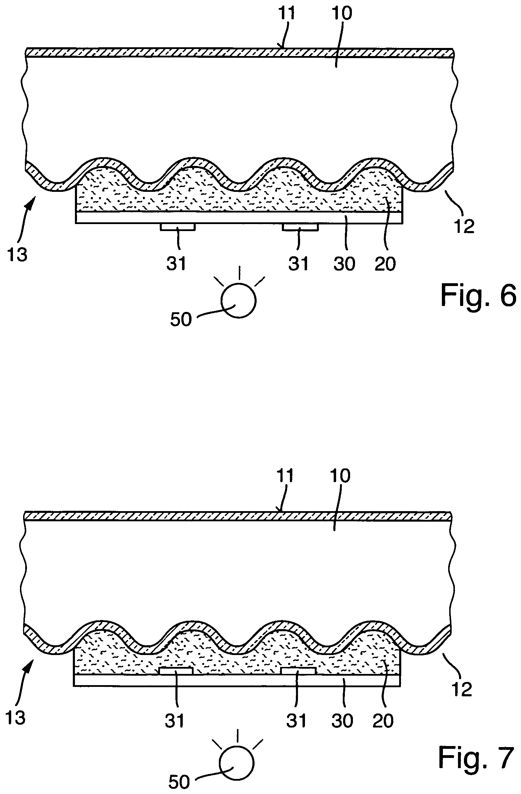

Die Erfindung wird im Folgenden anhand von in den Zeichnungen gemäß Figur 6 bis Figur 11 dargestellten Ausführungsbeispielen näher erläutert. Diese Zeichnungen zeigen den schematischen Aufbau von verschiedenen Anzeigevorrichtungen in Seitenansicht.

Figur 6 zeigt eine Glaskeramik 10, die eine ebene glatte Oberseite als Anzeigeseite 11 und eine rückseitige Beleuchtungsseite 12 aufweist. Die Beleuchtungsseite 12 ist strukturiert ausgebildet. Sie weist mithin eine Strukturierung 13 auf, die von noppenförmigen Erhebungen gebildet ist, wie sie bei Glaskeramik-Kochflächen üblich sind. Im Bereich der Beleuchtungsseite 12 ist die Strukturierung 13 mittels einer Ausgleichschicht hinterlegt, die als Zwischenschicht 20 ausgebildet ist. Die Zwischenschicht 20 wird beispielsweise von einem volltransparenten Polyurethanharz gebildet. Wie Figur 6 erkennen lässt, wird mittels der Zwischenschicht 20 die Unebenheit, die durch die Strukturierung 13 hervorgerufen wird, ausgeglichen, sodass die Zwischenschicht 20 auf ihrer, der Strukturierung 13 abgewandten Seite, eine ebene Fläche bildet. Auf diese ebene Fläche ist der Farb-Kompensationsfilter 30 aufgebracht. Dabei kann der Farb-Kompensationsfilter 30 mit der Zwischenschicht 20 verklebt sein. Der Zwischenschicht 20 abgekehrt trägt der Farb-Kompensationsfilter 30 Schichtelemente 31. Diese können als Maskierungen, Raster, Bediensymbole oder dergleichen ausgebildet sein. Sie können aufgedruckt oder beispielsweise als separates Element, insbesondere als Folie, aufgebracht werden. Denkbar ist es auch, dass die Schichtelemente 31 gelasert, geätzt, gesprüht oder gesputtert sind. Im Bereich hinter dem Farb-Kompensationsfilter 30 ist ein Leuchtelement 50 angeordnet. Das von dem Leuchtelement 50 emittierte Licht gelangt durch den Farb-Kompensationsfilter 30, die Zwischenschicht 20 und die Glaskeramik 10 auf den Bereich der Anzeigeseite 11. Beim Lichtdurchtritt wird bedingt durch den Farb-Kompensationsfilter 30 und die eingefärbte Glaskeramik 10 das Licht des Leuchtelementes 50 derart gefiltert, dass auf der Anzeigeseite 11 der gewünschte Lichteindruck entsteht. Zusätzlich kann es auch vorgesehen sein, dass die Zwischenschicht 20 teiltransparent ist, und ebenfalls als Filterelement wirkt, um den Lichtdurchtritt zu beeinflussen. Die Schichtelemente 31 können beispielsweise lichtundurchlässig ausgeführt sein. Damit kann an dieser Stelle kein Licht die Glaskeramik 10 passieren, sodass ein entsprechend dunkler optischer Eindruck auf der Anzeigeseite 11 erreicht wird. Auf diese Weise lassen sich beispielsweise Symbole, Anzeigeelemente oder dergleichen einfach darstellen.

Die Ausgestaltungsvariante gemäß Figur 7 entspricht der gemäß Figur 6. Im Unterschied zu der Figur 6 sind allerdings die Schichtelemente 31 in den Bereich zwischen der Zwischenschicht 20 und dem Farb-Kompensationsfilter 30 verlegt. Auf diese Weise sind sie vor mechanischen Beanspruchungen geschützt.

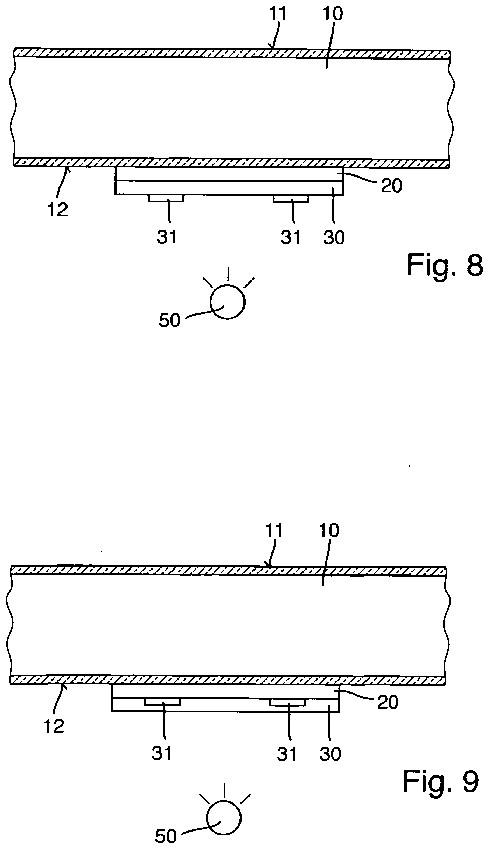

Figur 8 zeigt prinzipiell den gleichen Aufbau einer Anzeigevorrichtung, wie die Darstellung gemäß Figur 6. Allerdings handelt es sich vorliegend bei der Glaskeramik 10 um eine beidseitig glatte Glaskeramik 10, die sowohl im Bereich ihrer Anzeigeseite 11 als auch im Bereich ihrer Beleuchtungsseite 12 eben ausgebildet ist, sodass sich zwei planparallele Flächen an der Glaskeramik 10 ergeben. Die Zwischenschicht 20 muss mithin keine Oberflächenunebenheiten ausgleichen und dient vorliegend als Verbindungsschicht für den Farb-Kompensationsfilter 30. Dabei kann die Zwischenschicht 20 beispielsweise als Kleber (voll- oder teiltransparent) oder als Klebeband ausgebildet sein. Es hat sich gezeigt, dass insbesondere doppelseitig klebende Klebebänder als geeignet erwiesen haben. Diese können sowohl zur Ankopplung an die Glaskeramik 10 als auch an den Farb-Kompensationsfilter 30 verwendet werden. Bei dem Ausführungsbeispiel gemäß Figur 8 sind die Schichtelemente 31 außenliegend angeordnet. Das Ausführungsbeispiel gemäß Figur 9 unterscheidet sich von dem Ausführungsbeispiel gemäß Figur 8 dahingehend, dass die Schichtelemente 31 wieder zwischen dem Farb-Kompensationsfilter 30 und der Zwischenschicht 20 angeordnet sind.

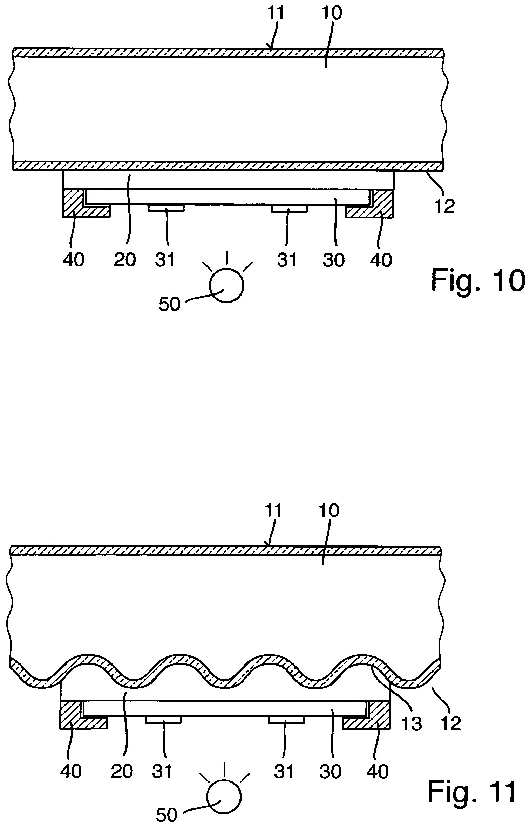

Das Ausführungsbeispiel gemäß Figur 10 stellt eine Erweiterung des Ausführungsbeispieles nach Figur 8 dar. Demgemäß werden leistenförmige Halteelemente 40 oder Halteelement 40 in Rahmenform verwendet, die an der Zwischenschicht 20 befestigt, beispielsweise angeklebt, sind. Die Halteelemente 40 bilden Führungen, in die stirnseitig der flächige Farb-Kompensationsfilter 30 eingeschoben werden kann. Damit ist es beispielweise möglich, den Farb-Kompensationsfilter 30 auszuwechseln oder eine Individualisierung durch Auswechseln des Farb-Kompensationsfilters 30 vorzunehmen.

Bei dem Ausführungsbeispiel nach Figur 11 ist wieder eine Glaskeramik 10 mit genoppter Unterseite verwendet. Hier übernimmt die Zwischenschicht 20 wieder die Funktion des Ausgleichs der geometrischen Unebenheit der Glaskeramik-Unterseite. Ähnlich wie bei dem Ausführungsbeispiel nach Figur 10 sind wieder Halteelemente 40 verwendet, die den Farb-Kompensationsfilter 30 tragen.

Der Farb-Kompensationsfilter 30 kann bei allen Ausführungsbeispielen eine Glasscheibe oder eine Kunststoffscheibe, insbesondere eine Kunststofffolie, sein. Dabei kann dieses Bauteil eingefärbt sein oder mit einer Beschichtung in der gewünschten Kompensationsfarbe versehen sein. Denkbar ist es, dass der Farb-Kompensationsfilter 30 auf seiner, der Glaskeramik 10 zugewandten Seite, mit einer Klebefläche vorkonfektioniert ist, sodass er direkt verklebt werden kann. Hierdurch entsteht ein einfacher Fertigungsablauf.

**Patentansprüche**

1.  Anzeigevorrichtung mit einer transparenten eingefärbten Glaskeramik (10), die eine vorderseitige Anzeigeseite (11) und eine rückwärtige Beleuchtungsseite (12) aufweist, wobei im Bereich der Beleuchtungsseite (12) mindestens ein Leuchtelement (50) angeordnet ist,
    **dadurch gekennzeichnet,**

    **dass** das Leuchtelement (50) eine weiße LED ist,
    **dass** zwischen der Glaskeramik (10) und dem Leuchtelement (50) ein Farb-Kompensationsfilter (30) angeordnet ist, mit dem der Farbort des Leuchtelements (50) verschoben wird,
    und **dass** zwischen dem Farb-Kompensationsfilter (30) und der Glaskeramik (10) eine zumindest teiltransparente Zwischenschicht (20) angeordnet ist.

2. Anzeigevorrichtung nach Anspruch 1,
   **dadurch gekennzeichnet,**
   **dass** die teiltransparente Zwischenschicht (20) den Farb-Kompensationsfilter (30) mittelbar oder unmittelbar mit der Glaskeramik (10) verbindet.

3. Anzeigevorrichtung nach Anspruch 1 oder 2,
   **dadurch gekennzeichnet,**
   **dass** die Zwischenschicht (20) der Glaskeramik (10) und/oder dem Farb-Kompensationsfilter (30) zugewandt eine Klebeschicht aufweist.

4. Anzeigevorrichtung nach Anspruch 3,
   **dadurch gekennzeichnet,**
   **dass** die Zwischenschicht (20) ein Klebeband ist.

5. Anzeigevorrichtung nach einem der Ansprüche 2 bis 3,
   **dadurch gekennzeichnet,**
   **dass** die Zwischenschicht (20) ein, insbesondere transparenter oder eingefärbter, Kleber ist.

6. Anzeigevorrichtung nach einem der Ansprüche 1 bis 5,
   **dadurch gekennzeichnet,**
   **dass** die Glaskeramik (10) im Bereich ihrer Beleuchtungsseite (12) zumindest bereichsweise mit einer Strukturierung (13) versehen ist, und dass die Zwischenschicht (20) auf diese Strukturierung (13) aufgebracht ist.

7. Anzeigevorrichtung nach einem der Ansprüche 1 bis 6,
   **dadurch gekennzeichnet,**
   **dass** die Zwischenschicht (20) ein Silikon-, ein Acrylat-, ein Polyurethanharz-, ein Epoxy-, ein Kautschuk-, ein Polyamid-, ein Polyimidmaterial aufweist oder daraus besteht oder eine Mischung zweier oder mehrerer der vorgenannten Materialien aufweist oder daraus besteht.

8. Anzeigevorrichtung nach einem der Ansprüche 1 bis 7,
   **dadurch gekennzeichnet,**
   **dass** der Brechungsindex der Glaskeramik (10) und der Zwischenschicht (20) maximal 20%, besonders bevorzugt 10%, voneinander abweichen.

9. Anzeigevorrichtung nach einem der Ansprüche 1 bis 8,
   **dadurch gekennzeichnet,**
   **dass** der Farb-Kompensationsfilter (30) und/oder die Zwischenschicht (20) ein oder mehrere Schichtelemente (31) trägt.

10. Anzeigevorrichtung nach einem der Ansprüche 1 bis 9,
    **dadurch gekennzeichnet,**
    **dass** der Farb-Kompensationsfilter (30) als eine Folie, Matte, Scheibe oder dergleichen Flächenelement ausgebildet ist, das mit einer Farbschicht, insbesondere einem Farbauftrag oder einem farbigen Flächenelement, beschichtet und/oder eingefärbt ist.

11. Anzeigevorrichtung nach einem der Ansprüche 1 bis 10,
    **dadurch gekennzeichnet,**
    **dass** die Glaskeramik (10) im Bereich ihrer Beleuchtungsseite (12) eine glatte, nicht strukturierte Fläche bildet.

12. Anzeigevorrichtung nach einem der Ansprüche 1 bis 11,
    **dadurch gekennzeichnet,**
    **dass** die Zwischenschicht (20) von einzelnen Teil-Schichtelementen, insbesondere punkt-, streifen- oder rasterförmigen, Elementen gebildet ist.

13. Anzeigevorrichtung nach einem der Ansprüche 1 bis 12,
    **dadurch gekennzeichnet,**

**dass** die Zwischenschicht (20) und/oder der Farb-Kompensationsfilter (30) und/oder die Glaskeramik (10) im Bereich ihrer Beleuchtungsseite (12) ein oder mehrere Montage-, Halteteile (50) oder dergleichen trägt.

14. Anzeigevorrichtung nach Anspruch 13,
   **dadurch gekennzeichnet,**
   **dass** die Montage-, Halteteile (50) oder dergleichen den Farb-Kompensationsfilter (30) und/oder eine elektrische Baueinheit, beispielsweise das Leuchtelement, eine Leiterplatte, einen Sensor oder dergleichen tragen.

15. Anzeigevorrichtung nach einem der Ansprüche 1 bis 14,
   **dadurch gekennzeichnet,**
   **dass** die Zwischenschicht (20) und/oder der Farb-Kompensationsfilter (30) eine Licht-Streuscheibe bildet.

16. Anzeigevorrichtung nach einem der Ansprüche 1 bis 15,
   **dadurch gekennzeichnet,**
   **dass** der Farb-Kompensationsfilter (30) und/oder die Zwischenschicht (20) und/oder ein weiteres zwischen dem Leuchtelement (50) und der Glaskeramik (10) angeordnetes Zwischenelement mit elektrisch leitfähigen Leiterbahnen, Schaltelementen, Elektroden, Sensoren oder dergleichen elektrische Bauelemente oder Funktionselemente versehen ist.

17. Anzeigevorrichtung nach einem der Ansprüche 1 bis 16,
   **dadurch gekennzeichnet,**
   **dass** die Schichtdickenschwankung der eingefärbten Zwischenschicht (20) und/oder des Farb-Kompensationsfilters (30) maximal 25 % der jeweiligen Schichtdicke beträgt.

## Claims

1. Display device having a transparent colored glass ceramic (10) which has a front display side (11) and a rear illumination side (12), at least one light element (50) being arranged in the region of the illumination side (12),
   **characterized in**

   **that** the light element (50) is a white LED,
   in that a color compensation filter (30) is arranged between the glass ceramic (10) and the light element (50), by means of which color compensation filter (30) the color locus of the light element (50) is shifted
   and in that an at least partially transparent intermediate layer (20) is arranged between the color compensation filter (30) and the glass ceramic (10).

2. Display device according to claim 1,
   **characterized in**
   **that** the partially transparent intermediate layer (20) connects the color compensation filter (30) indirectly or directly to the glass ceramic (10).

3. Display device according to claim 1 or 2,
   **characterized in**
   **that** the intermediate layer (20) has an adhesive layer facing the glass ceramic (10) and/or the color compensation filter (30).

4. Display device according to claim 3,
   **characterized in**
   **that** the intermediate layer (20) is an adhesive tape.

5. Display device according to any one of claims 2 to 3,
   **characterized in**
   **that** the intermediate layer (20) is an adhesive, in particular a transparent or colored adhesive.

6. Display device according to any one of claims 1 to 5,
   **characterized in**
   **that** the glass ceramic (10) is provided with a structuring (13) at least in regions in the region of its illumination side (12), and in that the intermediate layer (20) is applied to this structuring (13).

7. Display device according to any one of claims 1 to 6,
   **characterized in**
   **that** the intermediate layer (20) comprises or consists of a silicone, an acrylate, a polyurethane resin, an epoxy, a rubber, a polyamide, a polyimide material or comprises or consists of a mixture of two or more of the aforementioned materials.

8. display device according to any one of claims 1 to 7,
   **characterized in**
   **that** the refractive index of the glass-ceramic (10) and the intermediate layer (20) deviate from each other by a maximum of 20%, particularly preferably 10%.

9. Display device according to any one of claims 1 to 8,
   **characterized in**
   **that** the color compensation filter (30) and/or the intermediate layer (20) carries one or more layer elements (31).

10. Display device according to any one of claims 1 to 9,
    **characterized in**
    **that** the color compensation filter (30) is formed as a foil, mat, disc or similar surface element, which is colored and/or coated with a color layer, in particular a color application or a colored surface element.

11. Display device according to one of claims 1 to 10,
    **characterized in**
    **that** the glass ceramic (10) forms a smooth, non-structured surface in the region of its illumination side (12).

12. Display device according to one of claims 1 to 11,
    **characterized in**
    **that** the intermediate layer (20) is formed by individual partial layer elements, in particular elements in the form of dots, strips or grids.

13. Display device according to one of claims 1 to 12,
    **characterized in**
    **that** the intermediate layer (20) and/or the color compensation filter (30) and/or the glass ceramic (10) carries one or more mounting, holding parts (50) or the like in the region of its illumination side (12).

14. Display device according to claim 13,
    **characterized in that**
    that the mounting, holding parts (50) or the like carry the color compensation filter (30) and/or an electrical unit, for example the light element, a printed circuit board, a sensor or the like.

15. Display device according to any one of claims 1 to 14,
    **characterized in**
    **that** the intermediate layer (20) and/or the color compensation filter (30) forms a light diffusing plate.

16. Display device according to any one of claims 1 to 15,
    **characterized in**
    **that** the color compensation filter (30) and/or the intermediate layer (20) and/or a further intermediate element arranged between the light element (50) and the glass ceramic (10) is provided with electrically conductive conductor tracks, switching elements, electrodes, sensors or similar electrical components or functional elements.

17. Display device according to any one of claims 1 to 16,
    **characterized in**
    **in that** the layer thickness variation of the colored intermediate layer (20) and/or of the color compensation filter (30) is at most 25% of the respective layer thickness.

**Revendications**

1. Dispositif d'affichage avec une vitrocéramique (10) transparente et colorée, qui présente un côté d'affichage (11) à l'avant et un côté d'éclairage (12) à l'arrière, au moins un élément lumineux (50) étant disposé dans la zone du côté d'éclairage (12), **caractérisé en ce que**

   que l'élément lumineux (50) est une LED blanche,
   **en ce qu'**un filtre de compensation de couleur (30) est disposé entre la vitrocéramique (10) et l'élément lumineux (50), avec lequel le lieu de couleur de l'élément lumineux (50) est déplacé,
   et **en ce qu'**une couche intermédiaire (20) au moins partiellement transparente est disposée entre le filtre de compensation de couleur (30) et la vitrocéramique (10).

2. Dispositif d'affichage selon la revendication 1,
   **caractérisé en ce que**
   que la couche intermédiaire partiellement transparente (20) relie le filtre de compensation des couleurs (30) directement ou indirectement à la vitrocéramique (10).

3. Dispositif d'affichage selon la revendications 1 ou 2,
   **caractérisé en ce que**
   que la couche intermédiaire (20) présente une couche adhésive tournée vers la vitrocéramique (10) et/ou le filtre de compensation des couleurs (30).

4. Dispositif d'affichage selon la revendication 3,
   **caractérisé en ce que**
   **en ce que** la couche intermédiaire (20) est une bande adhésive.

5. Dispositif d'affichage selon l'une des revendications 2 à 3,
   **caractérisé en ce que**
   **en ce que** la couche intermédiaire (20) est un adhésif, notamment transparent ou coloré.

6. Dispositif d'affichage selon l'une des revendications 1 à 5,
   **caractérisé en ce que**
   **en ce que** la vitrocéramique (10) est pourvue, au moins par zones, d'une structuration (13) dans la zone de sa face d'éclairage (12), et **en ce que** la couche intermédiaire (20) est appliquée sur cette structuration (13).

7. Dispositif d'affichage selon l'une quelconque des revendications 1 à 6,
   **caractérisé en ce que**
   **en ce que** la couche intermédiaire (20) comprend ou est constituée d'un matériau silicone, acrylate, résine polyuréthane, époxy, caoutchouc, polyamide, polyimide, ou comprend ou est constituée d'un mélange de deux ou plusieurs des matériaux précités.

8. Dispositif d'affichage selon l'une quelconque des revendications 1 à 7,
   **caractérisé en ce que**
   que l'indice de réfraction de la vitrocéramique (10) et de la couche intermédiaire (20) diffèrent au maximum de 20%, de préférence de 10%.

9. Dispositif d'affichage selon l'une des revendications 1 à 8,
   **caractérisé en ce que**
   que le filtre de compensation de couleur (30) et/ou la couche intermédiaire (20) porte un ou plusieurs éléments de couche (31).

10. Dispositif d'affichage selon l'une des revendications 1 à 9,
    **caractérisé en ce que**
    **en ce que** le filtre de compensation de couleur (30) est réalisé sous la forme d'une feuille, d'un mat, d'un disque ou d'un élément de surface similaire, qui est revêtu et/ou coloré d'une couche de couleur, en particulier d'une couche de couleur ou d'un élément de surface coloré.

11. Dispositif d'affichage selon l'une quelconque des revendications 1 à 10,

**caractérisé en ce que**
**en ce que** la vitrocéramique (10) forme, dans la zone de sa face d'éclairage (12), une surface lisse non structurée.

**12.** Dispositif d'affichage selon l'une des revendications 1 à 11,
**caractérisé en ce que**
que la couche intermédiaire (20) est formée d'éléments de couche partiels individuels, en particulier d'éléments en forme de points, de bandes ou de trames.

**13.** dispositif d'affichage selon l'une des revendications 1 à 12,
**caractérisé en ce que**
**en ce que** la couche intermédiaire (20) et/ou le filtre de compensation de couleur (30) et/ou la vitrocéramique (10) portent, dans la zone de leur face d'éclairage (12), un ou plusieurs éléments de montage, de maintien (50) ou similaires.

**14.** Dispositif d'affichage selon la revendication 13,
**caractérisé en ce que**
que les pièces de montage, de maintien (50) ou similaires portent le filtre de compensation de couleur (30) et/ou un module électrique, par exemple l'élément lumineux, une carte de circuit imprimé, un capteur ou similaire.

**15.** Dispositif d'affichage selon l'une quelconque des revendications 1 à 14,
**caractérisé en ce que**
**en ce que** la couche intermédiaire (20) et/ou le filtre de compensation de couleur (30) forme un écran de diffusion de la lumière.

**16.** Dispositif d'affichage selon l'une quelconque des revendications 1 à 15,
**caractérisé en ce que**
que le filtre de compensation des couleurs (30) et/ou la couche intermédiaire (20) et/ou un autre élément intermédiaire disposé entre l'élément lumineux (50) et la vitrocéramique (10) est pourvu de pistes conductrices électriques, d'éléments de commutation, d'électrodes, de capteurs ou de composants électriques ou d'éléments fonctionnels similaires.

**17.** Dispositif d'affichage selon l'une quelconque des revendications 1 à 16,
**caractérisé en ce que**
**en ce que** la variation de l'épaisseur de couche de la couche intermédiaire colorée (20) et/ou du filtre de compensation de couleur (30) est au maximum de 25 % de l'épaisseur de couche respective.

## Transmissionsspektren Glaskeramiken

**Fig. 1**

## CIExyY,2° Observer
## Farborte der Normbeleuchtung E durch Glaskeramik

**Fig. 2**

CIExyY,2° Observer
Farborte der Normbeleuchtung E durch Glaskeramik Typ D
und Glaskeramik Typ d mit Kompensationsschicht

Fig. 3

Hellogen_blau_KTi

Fig. 4

CIExyY,2° Observer
Farborte der Normbeleuchtung E durch Glaskeramik Typ D
und Glaskeramik Typ d mit Kompensationsschicht

Fig. 5

Fig. 6

Fig. 7

Fig. 8

Fig. 9

EP 2 718 630 B1

Fig. 10

Fig. 11

21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10052370
- DE 102009013127
- DE 102010061123
- US 2007108184 A
- US 6369365 B